# EUROPÄISCHE PATENTSCHRIFT

(11) **EP 2 711 598 B1**
(45) Veröffentlichungstag und Bekanntmachung des Hinweises auf die Patenterteilung: **09.09.2015**
(21) Anmeldenummer: 12184955.8
(22) Anmeldetag: 19.09.2012
(51) Int. Cl.: F16L 55/179

(54) **Mehrfaches Hutprofil zur Kanalsanierung**
Multiple top profile for channel renovation
Profil de chapeau multiple pour l'assainissement de canaux

(43) Veröffentlichungstag der Anmeldung: 26.03.2014
(73) Patentinhaber: SAERTEX multiCom GmbH, 48369 Saerbeck (DE)
(72) Erfinder: Mersmann, Frank, 48369 Saerbeck (DE); Füchtjohann, Dr. Nils, 48268 Greven (DE); Kaiser, Georg, 48493 Wettringen (DE)
(74) Vertreter: Claessen, Rolf

(56) Entgegenhaltungen:
- EP-A2- 0 740 102
- EP-A2- 2 184 527
- DE-A1- 3 929 558
- DE-A1- 4 238 982
- DE-U1-202012 104 166
- US-A1- 2007 137 785

## Beschreibung

Die Erfindung betrifft ein für die Kanalsanierung geeignetes mehrfaches Hutprofil, ein Sanierungs-Kit einerseits aus einem mehrfachen Hutprofil und andererseits aus Epoxidharz, die Verwendung eines mehrfachen Hutprofils zur Kanalsanierung und ein Verfahren zur Einbindung/Abdichtung des Übergangs eines sanierten Kanals zu einem Seitenzulaufkanal, bei dem man ein mehrfaches Hutprofil in den Übergang einbringt.

Bislang geschieht die Abdichtung des Übergangs eines sanierten Kanals zu einem Seitenzulaufkanal mithilfe eines einfachen einzelnen Hutprofils. Dieses Hutprofil ist üblicherweise mit einem ungesättigten Polyesterharz getränkt. Dies hat den Nachteil, dass ungesättigtes Polyesterharz wasserempfindlich ist und daher die befestigten Hutprofile undicht werden oder schon bei der Aushärtung undicht sind, nicht mehr haften und herabfallen. Diese Hutprofile finden sich dann beispielsweise in Kläranlagen wieder. Manchmal wird das einfache einzelne Hutprofil auch mit Epoxidharz getränkt. In diesem Fall dauert die Aushärtung aber selbst bei Warmhärtung über eine Stunde, so dass die Sanierung sehr lange dauert.

US 2007/0137785 A1 beschreibt ein Verfahren zur Kanalsanierung von Hausanschlüssen.

EP 0 740 102 A2 beschreibt ein Verfahren zum Sanieren der undichten Wände von Leitungen.

DE 39 29 558 A1 beschreibt eine im Erdreich verlegte Abwasserrohrleitung mit einmündendem Hausanschlusskanal.

EP 2 184 527 A2 beschreibt ein Verfahren und Vorrichtung zum Tränken eines mit einer harzabsorbierbaren Schicht ausgestatteten Auskleidungsmoduls.

DE 42 38 982 A1 beschreibt einen Auskleidungsschlauch zum Sanieren unterirdisch verlegter Abwasserkanäle und Rohrleitungen.

DE 20 2012 104 166 U1 beschreibt ein Auskleidungselement zur Sanierung einer Rohrleitung.

Die Aufgabe der vorliegenden Erfindung besteht also darin, eine Technologie bereitzustellen, mit der man den Übergang eines sanierten Kanals zu einem Seitenzulaufkanal schnell und zuverlässig abdichten kann.

Diese Aufgabe wird in einer ersten Ausführungsform durch ein für die Kanalsanierung geeignetes mehrfaches Hutprofil gelöst, wobei der Schaft und/oder die Krempe aller einzelnen Hutprofile überwiegend aus Glasfasern bestehen, und wobei eines der Hutprofile, das nicht ganz außen liegt, mit einem Polyesterharz getränkt ist, wobei ein außen liegendes einzelnes Hutprofil mit einem Epoxidharz getränkt ist.

Dieses mehrfache Hutprofil besteht aus mehreren einzelnen Hutprofilen. Diese können beispielsweise ineinander gesteckt sein. Ein mehrfaches Hutprofil hat den Vorteil, dass beispielsweise ein innen liegendes einzelnes Hutprofil für die schnelle Aushärtung mit einem Polyesterharz getränkt werden kann und ein außen liegendes einzelnes Hutprofil für die bessere Haftung und Dichtigkeit mit einem Epoxidharz getränkt werden kann. Dies war mit der bislang bestehenden Technologie nicht möglich. Die Abdichtung bei der Kanalsanierung kann nun wesentlich schneller und zuverlässiger erfolgen.

Vorzugsweise besteht das mehrfache Hutprofil aus zwei einzelnen Hutprofilen. Es handelt sich also bevorzugt um ein doppeltes Hutprofil. Dies hat den besonderen Vorteil, dass die vorgenannten Vorteile je Hutprofil ausgenutzt werden können und das mehrfache Hutprofil dennoch relativ dünn bleibt. Der Querschnitt des Seitenzulaufkanals wird nicht unnötig beengt.

Das erfindungsgemäße mehrfache Hutprofil kann beispielsweise zumindest teilweise harzgetränkt sein und entweder unausgehärtet sein oder verbaut und ausgehärtet sein.

Erfindungsgemäß ist eines der Hutprofile, das nicht ganz außen liegt, mit einem Polyesterharz getränkt. Dies hat den besonderen Vorteil, dass beispielsweise auf der Baustelle vor dem Einbau lediglich noch das einzelne außen liegende Hutprofil mit Epoxidharz getränkt werden muss.

Es gibt auch ein für die Kanalsanierung geeignetes Hutprofil-Kit aus wenigstens einem nicht mit Harz getränkten einzelnen Hutprofil und wenigstens einem mit einem Polyesterharz getränkten einzelnen Hutprofil.

Das mit Polyesterharz getränkte einzelne Hutprofil ist vorzugsweise verpackt, wobei die Verpackung insbesondere undurchlässig für UV-Strahlung ist.

Bei dem erfindungsgemäßen Hutprofil-Kit besteht der Schaft und/oder die Krempe zumindest eines einzelnen Hutprofils vorzugsweise überwiegend aus Glasfasern. Dadurch ist der abgedichtete Übergang mechanisch und thermisch wesentlich stabiler.

Bei dem erfindungsgemäßen mehrfachen Hutprofil oder bei dem erfindungsgemäßen Hutprofil-Kit sind der Schaft und/oder die Krempe zumindest eines einzelnen Hutprofils vorzugsweise Maschenware, insbesondere Strickware, ganz besonders bevorzugt nahtlose Flachstrickware. Dadurch sind die Hutprofile im Unterschied zu den bekannten Hutprofilen besonders dehnbar und flexibel. Nahtlos ist besonders bevorzugt, da durch die fehlende Naht die Hutprofile besonders gleichmäßig mit Harz getränkt werden. Vorzugsweise ist das Material des Schaftes und/oder der Krempe doppellagig verarbeitet.

Bei dem erfindungsgemäßen mehrfachen Hutprofil oder bei dem erfindungsgemäßen Hutprofil-Kit ist das Polyesterharz vorzugsweise ein ungesättigtes Polyesterharz (UP-Harz). Dieses ist vorzugsweise lichthärtend. In der Polyesterharzmischung ist vorzugsweise ein Radikalstarter in so einer Menge enthalten, dass die Lichthärtung, insbesondere mit UV-Licht, innerhalb von 4 bis 10 Minuten geschieht.

Bei dem erfindungsgemäßen mehrfachen Hutprofil oder bei dem erfindungsgemäßen Hutprofil-Kit ist die Länge des Schaftes eines einzelnen Hutprofils vorzugsweise wenigstens 15 cm lang. Dadurch kann sichergestellt werden, dass die Dichtigkeit des Übergangs optimal ist. Die Länge des Schaftes beträgt vorzugsweise bis zu 1 m, insbesondere bis zu 30 cm. Vorzugsweise liegt der Durchmesser des Schaftes in einem Bereich von 5 bis 500 cm, insbesondere in einem Bereich von 10 bis 30 cm. Die Dicke des Schaftes liegt vorzugsweise in einem Bereich von 1 mm bis 5 mm.

Bei dem erfindungsgemäßen mehrfachen Hutprofil oder bei dem erfindungsgemäßen Hutprofil-Kit liegt das Flächengewicht des Materials eines einzelnen Hutprofils vorzugsweise in einem Bereich von 500 bis 1.500 g/m², insbesondere in einem Bereich von 850 bis 1.150 g/m².

Bei dem erfindungsgemäßen mehrfachen Hutprofil oder bei dem erfindungsgemäßen Hutprofil-Kit kann die Krempe auch ein Kurzliner sein. Vorzugsweise liegt die Breite der Krempe in einem Bereich von 2 bis 20 cm. Besonders bevorzugt kann die Breite der Krempe wenigstens 4 cm, ganz besonders bevorzugt wenigstens 5 cm betragen. Besonders bevorzugt kann die Breite der Krempe bis zu 15 cm, ganz besonders bevorzugt bis zu 10 cm und am meisten bevorzugt bis zur 8 cm betragen. Die Dicke der Krempe liegt vorzugsweise in einem Bereich von 1 mm bis 5 mm. Vorzugsweise hat die Krempe beispielsweise bei sogenannten Stutzen eine Kreisform, bei sogenannten Abzweigen ist sie vorzugsweise oval. Die Krempe ist vorzugsweise eingefasst, insbesondere gekettelt.

Bei dem erfindungsgemäßen mehrfachen Hutprofil oder bei dem erfindungsgemäßen Hutprofil-Kit können sowohl Schaft als auch Krempe aus demselben Material, insbesondere aus Glasfasern bestehen. Bei dem erfindungsgemäßen Hutprofil-Kit kann wenigstens das ganz außen liegende Hutprofil mit Epoxidharz getränkt sein. Insbesondere kann das Epoxidharz Bisphenol A, Bisphenol F und/oder 1,6-Hexandigycidylether enthalten. Dem Epoxidharz kann als Härter Dipropylentriamin und/oder 2-Piperazinoethylamin zugesetzt sein. Das Gewichtsverhältnis von Epoxidharz zu Härter kann in einem Bereich von 2:1 bis 4:1 liegen. Beispielsweise ist in der Epoxidharzmischung der Härter in so einer Menge enthalten, dass die Aushärtung bei Warmhärtung in einem Bereich von 1 bis 2 h, und bei Kalthärtung in einem Bereich von 9 bis 13 h geschieht.

Bei dem erfindungsgemäßen mehrfachen Hutprofil oder bei dem erfindungsgemäßen Hutprofil-Kit kann bei einem getränkten einzelnen Hutprofil das Gewichtsverhältnis von einem einzelnem Hutprofil zu Harz in einem Bereich von 1:2 bis 1:4 liegen. Liegt das Verhältnis deutlich darunter, kann es zu einer unzureichenden Verklebung kommen. Liegt das Verhältnis deutlich darüber, kann es beim Einbau zu Tropfenbildung kommen.

In einer weiteren Ausführungsform wird die der Erfindung zu Grunde liegende Aufgabe durch ein Sanierungs-Kit einerseits aus einem erfindungsgemäßen mehrfachen Hutprofil oder einem erfindungsgemäßen Hutprofil-Kit und andererseits aus Epoxidharz gelöst.

In einer weiteren Ausführungsform wird die der Erfindung zu Grunde liegende Aufgabe durch einen sanierten Kanal mit einem Seitenzulaufkanal gelöst, dadurch gekennzeichnet, dass der Übergang des sanierten Kanals zu dem Seitenzulaufkanal mit einem erfindungsgemäßen mehrfachen Hutprofil abgedichtet ist.

Der Seitenzulaufkanal ist vorzugsweise ausgewählt aus einem Hausanschlusskanal, einem Drainagekanal und/oder einem Kanal aus freiem Gewässer. Vorzugsweise ist das Harz ausgehärtet.

In einer weiteren Ausführungsform wird die der Erfindung zu Grunde liegende Aufgabe durch die Verwendung eines erfindungsgemäßen mehrfachen Hutprofils oder eines erfindungsgemäßen Hutprofil-Kits zur Kanalsanierung gelöst.

In einer weiteren Ausführungsform wird die der Erfindung zu Grunde liegende Aufgabe durch ein Verfahren zur Abdichtung des Übergangs eines sanierten Kanals zu einem Seitenzulaufkanal gelöst, bei dem man ein erfindungsgemäßes mehrfaches Hutprofil in den Übergang einbringt, so dass die Krempe eines einzelnen Hutprofils als Teil des mehrfachen Hutprofils auf der Innenseite des Kanals anliegt und die Außenseite des Schaftes dieses einzelnen Hutprofils an der Innenseite des Seitenzulaufkanals anliegt, und dieses einzelne Hutprofil einerseits mit dem Kanal und andererseits mit dem Seitenzulaufkanal stoffschlüssig verbunden wird.

Vorzugsweise tränkt man das einzelne Hutprofil, das mit dem Kanal und mit dem Seitenzulaufkanal stoffschlüssig verbunden wird, erst kurz vor dem Einbau mit Epoxidharz.

Die Krempe drückt man vorzugsweise mit einem Setzgerät an die Innenwand des Kanals an. Das Setzgerät kann beispielsweise im Wesentlichen aus einer Blase aus Silikon bestehen. Die Blase kann beispielsweise zum Andrücken der Krempe mit Druckluft aufgestellt werden. Die Silikonblase hat vorzugsweise keinen UV-Schutz, damit das UV-Licht das Polyesterharz gut aushärten kann. Die Blase stülpt sich beispielsweise in den Seitenzulaufkanal und presst damit den Schaft an die Innenwand des Seitenzulaufkanals an. Dabei wird beispielsweise die UV-Lampe mit in den Seitenzulaufkanal hineingezogen. Die UV-Lampe kann beispielsweise an der Spitze der Silikonblase, die sich in den Seitenzulaufkanal hineinstülpt, befestigt sein. Vorzugsweise ist innerhalb des Setzgeräts eine UV-Lichtquelle angeordnet. Vor dem Einbau wird der Haftgrund vorteilhafterweise vorbereitet, insbesondere angeraut. Zudem wird beispielsweise vor dem Einbau eine Hochdruckspülung durchgeführt. Der Haftgrund wird vor dem Einbau vorzugsweise in einen staubfreien und fettfreien Zustand versetzt.

Beim Einbringen des mehrfachen Hutprofils in den sanierten Kanal wird der Schaft vorzugsweise eingekrempelt und/oder zusammengedrückt, damit das Setzgerät mit dem mehrfachen Hutprofil besser in den sanierten Kanal an die Position des Seitenzulaufkanals gebracht werden kann. Bei der Beaufschlagung des Setzgeräts mit Druckluft entfaltet sich der Schaft vorzugsweise faltenfrei und homogen. Dadurch wird das erfindungsgemäße mehrfache Hutprofil durch die Blase an die Innenwand des Seitenzulaufkanals angedrückt.

Die Figuren sollen den Gegenstand der Erfindung keinesfalls beschränken, sondern zeigen lediglich konkrete Beispiele auf.

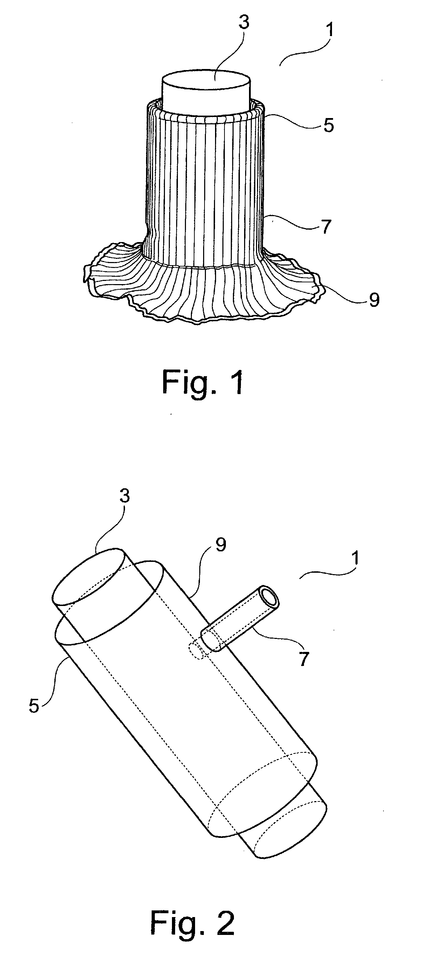

Figur 1 zeigt zwei ineinander gesteckte einzelne Hutprofile, die ein erfindungsgemäßes mehrfaches Hutprofil ergeben. Die Form ähnelt einem Hutzylinder, bei dem das Dach des Hutes entfernt wurde. Im außenliegenden einzelnen Hutprofil ist angedeutet, dass es sich um Strickware handelt. Das innenliegende Hutprofil ist lediglich schematisch angedeutet, im die Zeichnung übersichtlicher zu gestalten.

In Figur 2 nimmt die Krempe die Form eines Kurzliners an. Die beiden einzelnen ineinander gesteckten Hutprofile sind lediglich schematisch dargestellt.

### Ausführungsbeispiel

Zunächst wurden ein Abwasserkanal aus Steinzeug mit einem Durchmesser von 1 m und ein daran angrenzender Seitenzulaufkanal aus Steinzeug mit einem Durchmesser von 15 cm in Form eines Hausanschlusses mit Liner-Technologie saniert. Anschließend wurde der sanierte Abwasserkanal an der Stelle des Hausanschlusses geöffnet. Die Innenseite des sanierten Hausanschlusses und die Innenseite des sanierten Abwasserkanals wurden im Bereich des Übergangs mit Hochdruckspülung gereinigt. Die Oberfläche wurde in diesem Bereich durch Vorfräsen angeraut. Dieser Bereich wurde anschließend erneut gereinigt, so dass der Untergrund sowohl staubfrei als auch fettfrei war.

Anschließend wurde ein Setzgerät bereitgestellt. Das Setzgerät bestand im Wesentlichen aus einer Blase aus Silikon. An einem Ende der Blase waren ein Druckluftanschluss und einen elektrischer Anschluss vorgesehen. Innerhalb der Blase war eine UV-Lampe angeordnet. Das Material der Blase war nicht mit UV-Schutz versehen. Die Blase wurde so weit mit Druckluft aufgestellt, dass die Blase etwa zwei Drittel des Durchmessers des sanierten Abwasserkanals einnahm.

Anschließend wurde ein mit UP-Harz (mit UV Licht härtbar, handelsüblich) vorgetränktes Hutprofil aus einer Verpackung entnommen, die für UV-Licht undurchlässig war. Dieses Hutprofil wurde mittig auf der Blase aufgesetzt. Anschließend wurde ein noch nicht imprägniertes Hutprofil vor Ort mit Epoxidharz mit Härter getränkt. Dazu wurde das Produkt Saertex^{®} Yellow HP-EP eingesetzt. Dieses mit Epoxidharz getränkte Hutprofil wurde auf das mit UP-Harz vorgetränkte Hutprofil aufgesetzt. Der Schaft beider einzelnen Hutprofile war 18 cm lang. Die Krempe beider einzelnen Hutprofile war 8 cm breit. Die übrigen Dimensionen der Hutprofile wurden an den zu sanierenden Hausanschluss angepasst. Die einzelnen Hutprofile bestanden aus Glasfaser in nahtloser Flachstrickware mit einem Flächengewicht von jeweils 1.000 g/m². Dadurch entstand das erfindungsgemäße mehrfache Hutprofil. Das Setzgerät mit dem erfindungsgemäßen mehrfachen Hutprofil wurde dann unmittelbar bei dem ausgefrästen Seitenzulaufkanal positioniert. Anschließend wurde das Setzgerät weiter mit Druckluft beaufschlagt, so dass der Schaft des mehrfachen Hutprofils in den Seitenzulaufkanal eingeführt wurde und anschließend die Silikonblase in den Seitenzulaufkanal hineingestellt wurde. Dadurch wurde der Schaft der beiden einzelnen Hutprofile an die Innenwand des Seitenzulaufkanals angedrückt. Durch die Blase wurde natürlich auch die Krempe an die Innenwand des Abwasserkanals angedrückt.

Daraufhin wurde die UV-Lampe für 7 Minuten eingeschaltet. Das mit Polyesterharz imprägnierte Hutprofil wurde dadurch vollständig ausgehärtet. Durch die Wärme der Lampe wurde auch das mit Epoxidharz imprägnierte Hutprofil des mehrfachen Hutprofils teilweise durchpolymerisiert.

Das Setzgerät wurde entfernt und der sanierte Abwasserkanal mit dem Seitenzulaufkanal konnte wieder in Betrieb genommen werden. In den folgenden 10 Stunden härtete das Epoxidharz vollständig aus.

Die Haftzugfestigkeit nach DIN EN 1542 und DIN EN ISO 4624 betrug 4,7 MPa (N/mm²). Die Standardabweichung betrug bei insgesamt 6 Versuchen 1,56 MPa. Der Übergang war vollständig luftdicht.

In einem Vergleichsversuch wurde auf ein einzelnes Hutprofil, das mit UP-Harz getränkt war, Epoxidharz aufgetragen. Im Übrigen wurde der Vergleichsversuch identisch durchgeführt. Die Haftzugfestigkeit nach DIN EN 1542 und DIN EN ISO 4624 betrug 1,2 MPa (N/mm²). Die Standardabweichung betrug bei insgesamt 6 Versuchen 0,7 MPa. Der Übergang war vollständig luftdicht.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: Mehrfaches Hutprofil
- 3: Einzelnes Hutprofil (nicht ganz außen liegend)
- 5: Einzelnes Hutprofil (außen liegend)
- 7: Schaft
- 9: Krempe

## Patentansprüche

1. Für die Kanalsanierung geeignetes mehrfaches Hutprofil (1), wobei der Schaft (7) und/oder die Krempe (9) aller einzelnen Hutprofile (3, 5) überwiegend aus Glasfasern bestehen, und wobei eines der Hutprofile (3), das nicht ganz außen liegt, mit einem Polyesterharz getränkt ist, wobei ein außen liegendes einzelnes Hutprofil (5) mit einem Epoxidharz getränkt ist.

2. Mehrfaches Hutprofil (1) gemäß Anspruch 1, **dadurch gekennzeichnet, dass** der Schaft (7) und/oder die Krempe (9) zumindest eines einzelnen Hutprofils (3, 5) Maschenware, insbesondere Strickware, ganz besonders bevorzugt nahtlose Flachstrickware ist.

3. Mehrfaches Hutprofil (1) gemäß einem der Ansprüche 1 bis 2, **dadurch gekennzeichnet, dass** das Polyesterharz ein ungesättigtes Polyesterharz ist.

4. Mehrfaches Hutprofil (1) gemäß einem der Ansprüche 1 bis 3, **dadurch gekennzeichnet, dass** die Länge des Schaftes (7) eines einzelnen Hutprofils (3, 5) wenigstens 15 cm lang ist.

5. Mehrfaches Hutprofil (1) gemäß einem der Ansprüche 1 bis 4, **dadurch gekennzeichnet, dass** der Durchmesser des Schaftes (7) in einem Bereich von 5 bis 500 cm liegt.

6. Mehrfaches Hutprofil (1) gemäß einem der Ansprüche 1 bis 5, **dadurch gekennzeichnet, dass** das Flächengewicht des Materials eines einzelnen Hutprofils (3, 5) in einem Bereich von 500 bis 1500 g/m² liegt.

7. Sanierungs-Kit einerseits aus einem mehrfachen Hutprofil (1) gemäß einem der Ansprüche 1 bis 6 und andererseits aus Epoxidharz.

8. Sanierter Kanal mit einem Seitenzulaufkanal, **dadurch gekennzeichnet, dass** der Übergang des sanierten Kanals zu dem Seitenzulaufkanal mit einem mehrfachen Hutprofil (1) gemäß einem der Ansprüche 1 bis 6 abgedichtet ist.

9. Verwendung eines mehrfachen Hutprofils (1) gemäß einem der Ansprüche 1 bis 6 zur Kanalsanierung.

10. Verfahren zur Abdichtung des Übergangs eines sanierten Kanals zu einem Seitenzulaufkanal, bei dem man ein mehrfaches Hutprofil (1) gemäß einem der Ansprüche 1 bis 6 in den Übergang einbringt, so dass die Krempe (9) eines einzelnen Hutprofils (5) als Teil des mehrfachen Hutprofils (1) auf der Innenseite des Kanals anliegt und die Außenseite des Schaftes (7) dieses einzelnen Hutprofils (5) an der Innenseite des Seitenzulaufkanals anliegt, und dieses einzelne Hutprofil (5) einerseits mit dem Kanal und andererseits mit dem Seitenzulaufkanal kraft- und/oder stoffschlüssig verbunden wird.

11. Verfahren gemäß Anspruch 10, **dadurch gekennzeichnet, dass** man das einzelne Hutprofil (5), das mit dem Kanal und mit dem Seitenzulaufkanal kraft- und/oder stoffschlüssig verbunden wird, erst kurz vor dem Einbau mit Epoxidharz tränkt.

## Claims

1. Multiple hat profile (1) suitable for canal rehabilitation, wherein the shaft (7) and/or the brim (9) of all the individual hat profiles (3, 5) are primarily composed of fibre glass, and wherein one of the hat profiles (3), which does not lie entirely externally, is impregnated with a polyester resin, wherein an externally lying individual hat profile (5) is impregnated with an epoxy resin.

2. Multiple hat profile (1) according to Claim 1, **characterised in that** the shaft (7) and/or the brim (9) at least of an individual hat profile (3, 5) is a stitched fabric, in particular a knitted fabric, particularly preferably a seamless flat knitted fabric.

3. Multiple hat profile (1) according to any one of Claims 1 or 2, **characterised in that** the polyester resin is an unsaturated polyester resin.

4. Multiple hat profile (1) according to any one of Claims 1 to 3, **characterised in that** the length of the shaft (7) of an individual hat profile (3, 5) is at least 15 cm long.

5. Multiple hat profile (1) according to any one of Claims 1 to 4, **characterised in that** the diameter of the shaft (7) lies in a range from 5 to 500 cm.

6. Multiple hat profile (1) according to any one of Claims 1 to 5, **characterised in that** the grammage of the material of an individual hat profile (3, 5) lies in a range from 500 to 1500 g/m².

7. Rehabilitation kit on one hand composed of a multiple hat profile (1) according to any one of Claims 1 to 6 and on the other hand of epoxy resin.

8. Rehabilitated canal with a side feed canal, **characterised in that** the transition from the rehabilitated canal to the side feed canal is sealed off with a multiple hat profile (1) according to any one of Claims 1 to 6.

9. Use of a multiple hat profile (1) according to any one of Claims 1 to 6 for canal rehabilitation.

10. Method for sealing off the transition of a rehabilitated canal to a side feed canal in the case of which a multiple hat profile (1) according to any one of Claims 1 to 6 is introduced into the transition so that the brim (9) of an individual hat profile (5) as part of a multiple hat profile (1) bears on the inside of the canal and the outside of the shaft (7) of this individual hat profile (5) bears against the inside of the side feed canal and this individual hat profile (5) is connected with a non-positive and/or stubstance-to-substance bond on one hand to the canal and on the other hand to the side feed canal.

11. Method according to Claim 10, **characterised in that** the individual hat profile (5), which is connected with a non-positive and/or substance-to-substance bond manner to the canal and to the side feed canal, is only impregnated with epoxy resin shortly before installation.

## Revendications

1. Profil de chapeau multiple (1) pour l'assainissement de canaux, dans lequel la tige (7) et/ou le rebord (9) de chacun des profils de chapeau individuels (3, 5) est composé de fibres de verre, et dans lequel l'un des profils de chapeau (3), qui n'est pas complètement étendu à l'extérieur, est imprégné d'une résine de polyester, dans lequel un profil de chapeau individuel (5) étendu à l'extérieur est imprégné d'une résine époxy.

2. Profil de chapeau multiple (1) selon la revendication 1, **caractérisé en ce que** la tige (7) et/ou le bord (9) est au moins un profil de chapeau individuel (3, 5) en tissu maillé, en particulier en tissu tricoté, de manière particulièrement préférée un tissu piqué de préférence sans couture.

3. Profil de chapeau multiple (1) selon la revendication 1 ou 2, **caractérisé en ce que** la résine de polyester est une résine polyester insaturé.

4. Profil de chapeau multiple (1) selon l'une quelconque des revendications 1 à 3, **caractérisé en ce que** la longueur de la tige (7) d'un profil de chapeau individuel (3, 5) est d'au moins 15 cm de long.

5. Profil de chapeau multiple (1) selon l'une quelconque des revendications 1 à 4, **caractérisé en ce que** le diamètre de la tige (7) est dans une plage de 5 à 500 cm.

6. Profil de chapeau multiple (1) selon l'une quelconque des revendications 1 à 5, **caractérisé en ce que** le grammage du matériau d'un profil de chapeau individuel (3, 5) se trouve dans une plage de 500 à 1 500 g/m2.

7. Kit d'assainissement constitué d'une part d'un profil de chapeau multiple (1) selon l'une quelconque des revendications 1 à 6, et d'autre part de résine époxy.

8. Canal assaini avec un canal d'arrivée latéral, **caractérisé en ce que** le passage du canal assaini vers le canal d'arrivée latéral est étanchéifié à l'aide d'un profil de chapeau multiple (1) selon quelconque des revendications 1 à 6.

9. Utilisation d'un profil de chapeau multiple (1) selon l'une quelconque des revendications 1 à 6 pour l'assainissement de canaux.

10. Procédé pour étanchéifier le passage d'un canal réorganisée ver un canal d'arrivée latéral, par l'intermédiaire duquel un profil de chapeau multiple (1) selon l'une quelconque des revendications 1 à 6 est introduit dans le passage, de sorte que le bord (9) d'un profil de chapeau individuel (5) faisant partie du profil de chapeau multiple (1) repose sur la face intérieure du canal, et la face extérieure de la tige (7) de ce profil de chapeau individuel (5) repose à l'intérieur du canal d'arrivée latéral, et ce profil de chapeau individuel (5) va être relié par liaison de force et/ou conjugaison de matières d'une part au canal, et d'autre part au canal d'arrivée latérale.

11. Procédé selon la revendication 10, **caractérisé en ce que** le profil de chapeau individuel (5), qui va être relié par liaison de force et/ou conjugaison de matières au canal et au canal d'arrivée latérale, va être imprégné d'une résine époxy peu de temps avant l'installation.
